# EUROPÄISCHE PATENTSCHRIFT

(11) **EP 1 655 173 B1**
(45) Veröffentlichungstag und Bekanntmachung des Hinweises auf die Patenterteilung: **14.04.2010**
(21) Anmeldenummer: 05024182.7
(22) Anmeldetag: 07.11.2005
(51) Int. Cl.: B60Q 1/04

(54) **Kraftfahrzeug mit einer energieabsorbierenden Vorderwagenstruktur sowie Scheinwerfer für ein derartiges Kraftfahrzeug**
Vehicle having an energy absorbing front part structure and headlight for such a vehicle.
Véhicule comportant une structure avant d'absorption de choc, et phare pour ce type de véhicule.

(30) Priorität: 05.11.2004 DE 102004054020
(43) Veröffentlichungstag der Anmeldung: 10.05.2006
(73) Patentinhaber: PEGUFORM GMBH, 79268 Bötzingen (DE)
(72) Erfinder: Rinderlin, Jürgen, 79279 Vörstetten (DE)
(74) Vertreter: Patentanwälte Westphal, Mussgnug & Partner

(56) Entgegenhaltungen:
- EP-A- 1 288 068
- EP-A1- 1 400 408
- EP-A2- 1 332 915
- DE-A1- 3 802 104
- DE-A1- 10 101 794
- DE-A1- 10 156 240
- DE-C2- 10 023 570
- JP-A- 2001 213 225
- US-B1- 6 199 942

## Beschreibung

Die Erfindung bezieht sich auf ein Kraftfahrzeug mit einer Vorderwagenstruktur gemäß Oberbegriff des Anspruchs 1.

Es ist ganz allgemein bekannt, Kraftfahrzeuge mit einer Vorderwagenstruktur zu versehen, die im Falle eines Hochgeschwindigkeits-Zusammenstoßes (High-Speed-Crash) Energie gezielt so absorbiert, dass die auf die Insassen einwirkenden Kräfte soweit wie möglich reduziert werden. Steigende Anforderungen an die Auslegung der Vorderwagenstruktur zur Verbesserung der Energieabsorption und des dynamischen Crashverhaltens zwingen in Verbindung mit der Forderung nach reduziertem Bauraum dazu, durch geeignete Maßnahmen Raum für zusätzliche Energieabsorber zu schaffen. Die Tendenz geht deshalb dahin, mehrere sogenannte Crashebenen oder Lastpfade vorzusehen, die eine verbesserte Kraftverteilung und Kraftleitung ermöglichen.

Die erste Crashebene kann beispielsweise durch die Kotflügelbänke und den Frontendträger gebildet werden. Zusätzliche Crashebenen können die Längsträgerebene, welche sich aus einer Stoßfänger-Querträger, einer Crashbox und zumindest einem Längsträger zusammensetzt, aufgebaut werden.

Die vorstehend geschilderten Maßnahmen führen zwar zu einer verminderten Belastung der Insassen im Falle eines Hochgeschwindigkeits-Zusammenstoßes, jedoch reichen die bisherigen Maßnahmen - speziell bei kleinen Fahrzeugen - nicht aus, um die gestiegenen Anforderungen an die Insassensicherheit zu erfüllen.

Der vorliegenden Erfindung lag deshalb das Problem zugrunde, durch konstruktive Maßnahmen im Bereich der Vorderwagenstruktur eines Kraftfahrzeugs die Energieabsorption bzw. das dynamische Crashverhalten im Falle eines Hochgeschwindigkeits-Zusammenstoßes weiter zu verbessern.

Dieses Problem wird bei einem gattungsgemäßen Kraftfahrzeug durch die kennzeichnenden Merkmale des Anspruchs 1 gelöst. Vorteilhafte Ausführungsvarianten sind Gegenstand von Unteransprüchen.

Dieses Problem wird weiterhin durch einen Scheinwerfer für ein derartiges Kraftfahrzeug gemäß den Merkmalen des Anspruchs 6 gelöst. Vorteilhafte Ausgestaltungsformen finden sich in den nachgeordneten Unteransprüchen.

Die Erfindung basiert auf der Idee, das Gehäuse des bzw. der Scheinwerfer als integrale Bestandteile der Vorderwagenstruktur auszubilden und diese gezielt plastisch verformbar zu gestalten. Das Gehäuse ist somit sowohl konstruktiv als auch hinsichtlich der Materialdefinition als sogenannte Crashbox ausgelegt.

Hierfür gibt es aus dem Stand der Technik kein Vorbild.

So sind Scheinwerferkonzepte, beispielsweise aus der DE 100 62 735 A1 oder der US 2004/0012975 A1 bekannt geworden, die im Falle einer Kollision mit einem Fußgänger eine elastische Verformung erlaubt. Neben der Reduzierung der Belastung des Fußgängers wird darüber hinaus erreicht, dass der Scheinwerfer nach der Kollision in seine Ausgangslage zurückkehren kann und nicht beschädigt wird.

Weitere Vorschläge zielen darauf ab, im Falle leichterer Kollisionen den Scheinwerfer als solchen zu schützen. Im Falle der JP 2001-213225 AA gelingt dies durch eine elastische Verformung der Linse, die in ihre Ausgangslage zurückkehren kann. Andere Konzepte zielen darauf ab, den Scheinwerfer vor einer Beschädigung durch ein entsprechendes Aufhänge-Hebelsystem (JP 03-208738 AA) oder durch Sollbruchstellen (JP 06-321002 AA) zu schützen.

Weitere Konzepte zielen Schließlich darauf auf, im Falle von Niedriggeschwindigkeits-Kollisionen eine elastische oder auch plastische Deformation zuzulassen, beispielsweise über ein separates sogenanntes Opferteil gemäß der US 2004/0057249 A1, oder ein separates Bauteil, das zwischen Linse und Gehäuse eingesetzt ist (US 2004-0136195 A1 bzw. FR 2844753 A1).

Die DE 100 23 570 C2 beschreibt eine Leuchteinheit, die am nach außen gewandten Ende einer Tragstruktur eines Fahrzeugs angeordnet ist, welche ein Leuchtengehäuse aufweist, das als Energie absorbierendes Deformationsglied ausgebildet ist, wobei die Anordnung so gestaltet ist, dass bei leichten und mittleren Aufprallbelastungen lediglich das Gehäuse der Leuchteinheit verformt wird und anschließend auf relativ kostengünstige Art ausgetauscht werden kann.

Die EP 1 400 408 A1 beschreibt einen Scheinwerfer mit einem Gehäuse, das über Sollbruchstellen mit der Fahrzeugkarosserie verbunden ist. Diese Sollbruchstellen dienen dazu, zumindest einen Teil der Energie eines Aufpralls aufzufangen.

Die EP 1 332 915 A2 beschreibt eine Frontlampenanordnung zum Schutze von Fußgängern, wobei die Lampe im Falle eines Zusammenpralls mit einem Fußgänger über eine Achse nach hinten klappt.

Die DE 38 02 104 A1 beschreibt eine Anordnung einer Beleuchtungseinheit eines Fahrzeugs, die ein an der Karosserie von einer nachgiebigen Abstützung gestütztes Gehäuse zur Aufnahme wenigstens einer Lampe aufweist. Dabei ist vorgesehen, dass das Gehäuse bei einer von außen einwirkenden Stoßbelastung in einen karosserieseitigen Freiraum ausweichen kann.

Die Scheinwerferkonzepte gemäß den genannten DE 100 23 570 C2, EP 10 400 408 A1, EP 1 332 915 A2 und DE 38 02 104 A1 sind primär auf den Fußgängerschutz gerichtet.

Im Gegensatz dazu wird gemäß der vorliegenden Erfindung das Gehäuse von vorne herein als Bestandteil der Crashstruktur so ausgelegt, dass es als Crashbox für einen High-Speed-Crash wirkt. Das Gehäuse bzw. der gesamte Scheinwerfer stützen sich an der Fahrzeugstruktur so ab, dass die Deformation sicher gewährleistet ist.

Das Gehäuse ist an einem eine Crashebene bildenden Abschnitt der Vorderwagestruktur derart befestigt, dass es eine lineare Verformungsbewegung vollziehen kann. Das Gehäuse kann wenigstens einen Abschnitt aufweisen, der als Absorberelement ausgebildet ist. Als Absorberelemente eignen sich insbesondere profilierte Gehäusewände, die insbesondere wenn sie eine Vielzahl von Knickstellen aufweisen, ein optimales Verformungsverhalten aufweisen.

So hat es sich als vorteilhaft erwiesen, dass im Falle des Impacts der gesamte Scheinwerfer bis zur rückwärtigen Anlage an die Kotflügelbank nach hinten verschoben wird. Bei weiterer Krafteinwirkung steigt das Kraftniveau zunächst stark an, so dass das Gehäuse beginnt, sich plastisch zu verformen, wodurch das Kraftniveau absinkt. Danach steigt die Kraft erneut an, bis das Niveau erreicht wird, an dem das Gehäuse weiter verformt wird. Auf diese Weise wird ein sogenanntes Ziehharmonikaverhalten erzielt, das in der Lage ist, ein hohes Maß an Energie abzubauen. Somit wird erreicht, dass ein geringerer Verformungsweg in der Fahrzeugstruktur vorgesehen werden muss.

Zur Umsetzung der Profilierung der Gehäusewand stehen viele Varianten zur Verfügung. So können beispielsweise kostengünstig Wellen-, Trapez-, Zick-Zack- oder Halbschalenprofile realisiert werden. Hinsichtlich des Absorptionsvermögens haben sich Stufen-, Hohl- und Wabenprofile erwiesen.

Auch ist es möglich, die Wandungen des Gehäuses zusätzlich beispielsweise durch lokale Materialanhäufung, hochfeste Faserstrukturen oder Metallstreifen zu verstärken. Die Metallstreifen erstrecken sich hierbei in Richtung des Deformationsweges und übernehmen einen Teil der Energieabsorption. Diese sogenannte Hybridlösung ist relativ einfach zu realisieren.

Auch kann es vorteilhaft sein, die Seitenwände des Gehäuses mit Löchern, lokalen Einschnürungen, Materialverschwächungen oder anderen Falthilfen zu versehen, so dass eine gezielte plastische Deformation sichergestellt ist.

Die vorstehend beschriebenen Maßnahmen ermöglichen es, Scheinwerfergehäuse unterschiedlichster Formen zu realisieren und hierbei das gewünschte Deformationsverhalten zu implementieren. Je nach Ausführung kann es ausreichend sein, beispielsweise lediglich die Ober- und die Unterseite des Gehäuses als Absorberelement auszuführen. Bei heute häufig anzutreffenden von der Rechteckform abweichenden Querschnittsformen ist es möglich, sämtliche Seitenwände des Gehäuses als Absorberelemente auszulegen. Die Erfindung wird nachstehend anhand des in den Figuren schematisch dargestellten Ausführungsbeispiels näher erläutert.

Es zeigen:
- Fig. 1: Vorderwagen eines Kraftfahrzeugs,
- Fig. 2: Scheinwerfer in Schnittdarstellung, grundsätzlicher Aufbau,
- Fig. 3 bis Fig. 9: Scheinwerfer gemäß Fig. 2 mit unterschiedlichen Absorberelementen,
- Fig. 10: Scheinwerfer in Seitenansicht mit Metallstreifen,
- Fig. 11: Scheinwerfer in Seitenansicht mit Löchern.

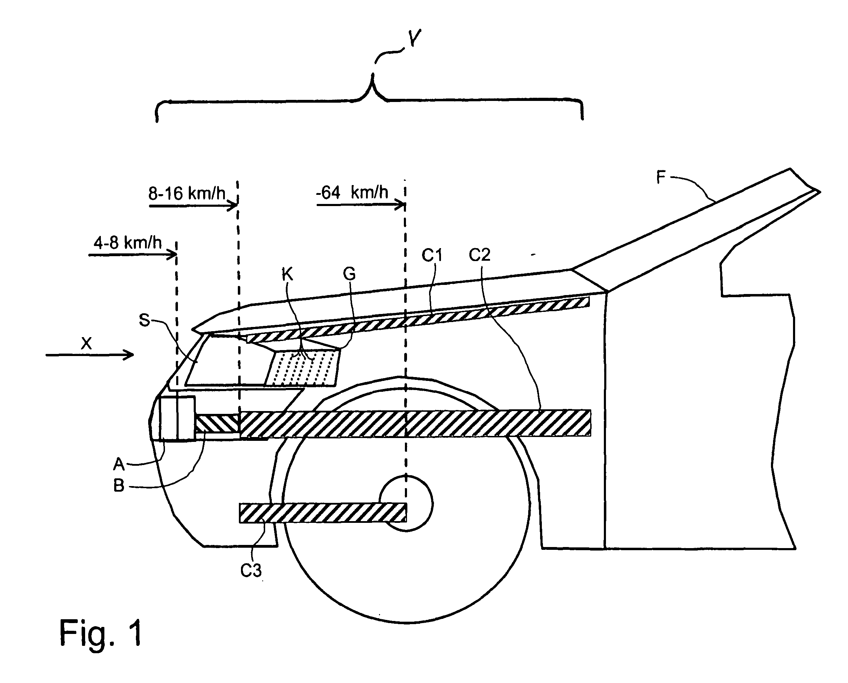

Wie aus Fig. 1 ersichtlich, sind im Vorderbau eines Fahrzeugs F mehrere sogenannte Crashebenen C1, C2, C3 vorgesehen, um Energie im Fall eines Hochgeschwindigkeitszusammenstoßes zum Schutz von Fahrzeuginsassen aufzunehmen. Außerdem sind für den Fall eines Zusammenstoßes mit geringerer Geschwindigkeit vorgelagerte Crashzonen A, B ausgebildet, welche im Fall eines Zusammenstoßes mit 4-8km/h zum Schutz von angefahrenen Fußgängern bzw. im Fall eines innerstädtischen Auffahrunfalls mit beispielsweise bis zu 16km/h vor einer Aktivierung der Crashebenen für Hochgeschwindigkeitszusammenstöße aktiviert werden. Die Crashebenen für einen Hochgeschwindigkeitszusammenstoß dienen zur Absorbierung von Energien bei einem Zusammenstoß von beispielsweise bis zu 64km/h oder mehr. Natürlich können die drei Crashebenen C1-C3 auch zeitlich und/oder energieabhängig aufeinanderfolgend aktiviert werden und ggf. zur Absorption von Energien bei einem Zusammenstoß mit einer niedrigeren oder höheren Geschwindigkeit ausgelegt sein.

Bei dem dargestellten Ausführungsbeispiel wird die zweite Crashebene C2 und die dritte Crashebene C3 durch tieferliegende Längsträger im Fahrzeug F in für sich bekannter Art und Weise ausgebildet. Die erste Crashebene C1 wird durch einen Frontendträger-Obergurt als Querträger zum Zusammenhalten der Fahrzeugstruktur, eine Kotflügelbank als Längsträger und einen Scheinwerfer S als sogenannte Crashbox ausgebildet.

Der Scheinwerfer S inklusive seinem Gehäuse G benötigt in dem Fahrzeug F sehr viel Raum, wobei das Gehäuse G derzeit keine andere Funktion besitzt als das Innenleben des Scheinwerfers S vor Feuchtigkeit und Schmutz zu schützen. Zum Ausbilden des Scheinwerfers S als Crashbox können in dem Gehäuse G energieabsorbierende Elemente sowohl durch das technische Design als auch durch eine Integration von Zusatzmaterialien eingebaut werden. Zusätzlich oder alternativ können eine oder mehrere der Wandungen des Gehäuses G als energieabsorbierende Wandung ausgebildet werden.

Das Gehäuse G weist dazu beispielsweise gezielte Sollknickstellen K auf, so dass das Verformungserscheinungsbild des Gehäuses G im Fall eines Zusammenstoßes dem einer für sich bekannten Stahlcrashbox ähnelt. Im Fall eines Zusammenstoßes wird das Gehäuse G längs der Sollknickstellen K ziehharmonikaförmig gestaucht, wobei im Bereich eines typischen Gehäuses gegebenenfalls mehr als hundert, insbesondere ca. 200 Sollknickstellen bzw. Verformungswege ausbildbar sind.

Das Gehäuse G des Scheinwerfers ist vorzugsweise zum Abfangen von Stößen in bzw. entgegen der Fahrtrichtung als erster Richtung X ausgelegt. Optional können auch seitliche oder schräg seitlich einwirkende Kräfte bei der Ausgestaltung der Crashbox berücksichtigt werden.

Der Scheinwerfer S bzw. dessen Gehäuse G wird in dem Fahrzeug F an der Kotflügelbank bzw. dem oberen Längsträger abgestützt. Im Fall einer linearen Verformungsbewegung in der ersten Richtung X verformt sich das Gehäuse G entsprechend dem vorgegebenen Kraftniveau. Nachdem das Gehäuse G die maximale Verformung erreicht hat, leitet das verformte Gehäuse G weitere einwirkende Energie optimal an den oberen Längsträger bzw. die Kotflügelbank weiter, so dass darüber eine weitere Crashebene aktivierbar ist. Ermöglicht wird dadurch das Absorbieren von Energie im Vorderwagen vor allem bei einem Hochgeschwindigkeitszusammenstoß auf möglichst kurzem Wege zur Reduzierung der Belastung der Fahrzeuginsassen. Insbesondere bei einem Hochgeschwindigkeitszusammenstoß erfolgt der Stoß bzw. die Energieeinwirkung über die gesamte Fahrzeughöhe, so dass die durch den Scheinwerfer S bzw. dessen Gehäuse G ausgebildete Crashbox unmittelbar nach Beginn des Zusammenstoßes aktiviert wird.

Die Ausgestaltung der Crashbox, welche durch das Gehäuse G bzw. den Scheinwerfer S ausgebildet wird, erfolgt vorzugsweise derart, dass beim Zusammenstoß der gesamte Scheinwerfer S bis zur Abstützung an der Kotflügelbank nach hinten verschoben wird. Danach wird eine Kraft aufgebaut. Ist ein bestimmtes Kraftniveau erreicht, fängt das Gehäuse G an, sich zu verformen, so dass das einwirkende Kraftniveau absinkt. Danach wird wieder eine zunehmende Kraft aufgebaut, bis das Kraftniveau zur Verformung erneut erreicht ist. Im Bereich einer weiteren Sollknickstelle K tritt eine Verformung ein, was wiederum zum Absinken des momentanen Kraftniveaus führt. Durch ein derartiges Ziehharmonikaverhalten ist garantiert, dass eine bestimmte Energie abgebaut wird und dadurch weniger Verformungsweg in der sonstigen Fahrzeugstruktur benötigt wird. Insbesondere bei Zusammenstößen mit höherer aber nicht zu hoher Geschwindigkeit kann dadurch nach erfolgter Aktivierung der ersten Crashzonen A, B durch den Scheinwerfer F bzw. dessen Gehäuse G weitere Energie aufgenommen werden, bevor tragende Konstruktionen des Fahrzeugs F zur Absorption weiterer Energie verformt werden.

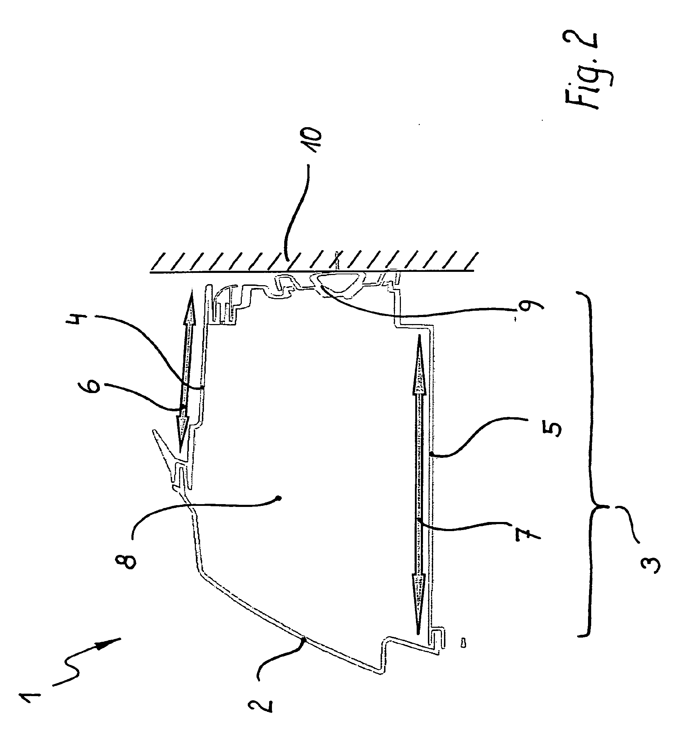

Fig. 2, die kein Ausführungsbeispiel der vorliegenden Erfindung wiedergibt, zeigt den grundsätzlichen Aufbau eines Scheinwerfers 1 mit einer Scheibe 2 und einem Scheinwerfergehäuse 3. Das Scheinwerfergehäuse 3 besteht im Wesentlichen aus einer oberen Gehäusewand 4, einer unteren Gehäusewand 5, zwei Gehäuseseitenwänden 8 (aufgrund der Schnittdarstellung ist nur eine der beiden Gehäuseseitenwände 8 sichtbar) sowie eine Gehäuserückwand 9. Das Gehäuse 3 ist über die Gehäuserückwand 9 mit der Fahrzeugstruktur 10 fest verbunden. Bei der Fahrzeugstruktur 10 kann es sich beispielsweise um einen steifen Träger oder dergleichen handeln.

Im hier dargestellten Fall sind die obere Gehäusewand 4 und die untere Gehäusewand 5 jeweils als Absorberelement ausgeführt und dazu bestimmt, im Falle eines Hochgeschwindigkeits-Zusammenstoßes durch plastische Verformung Energie aufzunehmen. Die zur Verfügung stehenden Deformationswege 6, 7 korrespondieren mit der jeweiligen Länge der Gehäusewände 4, 5.

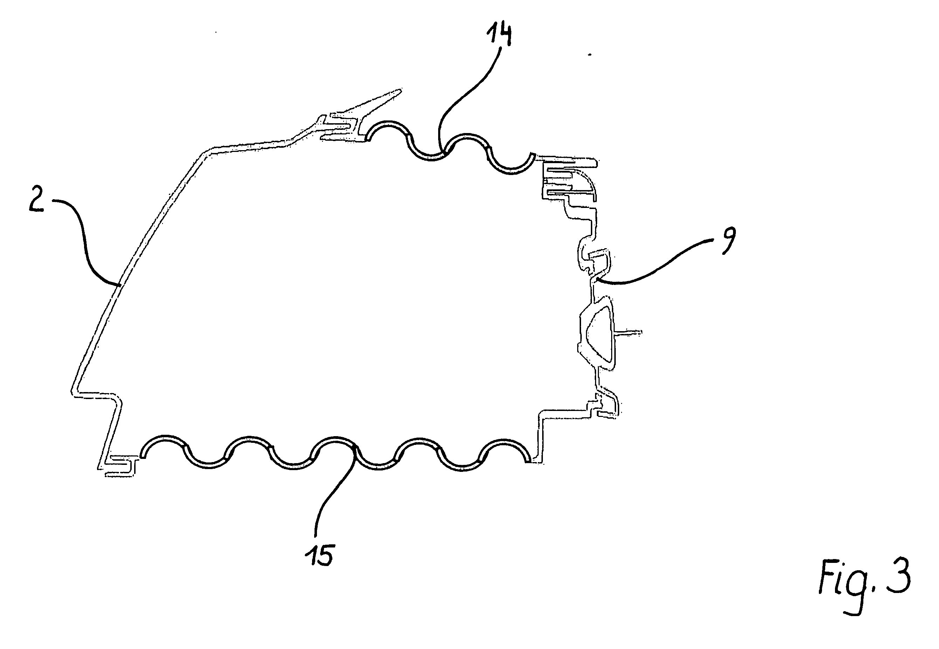

Ausführungsvarianten der Gehäusewände 4, 5 sind in den Fig. 3 bis 9 dargestellt.

Fig. 3 zeigt Wellenprofile 14, 15, die einfach und kostengünstig herstellbar sind. Die Wellenform ermöglicht eine in Deformationsrichtung gleichmäßige Energieabsorption.

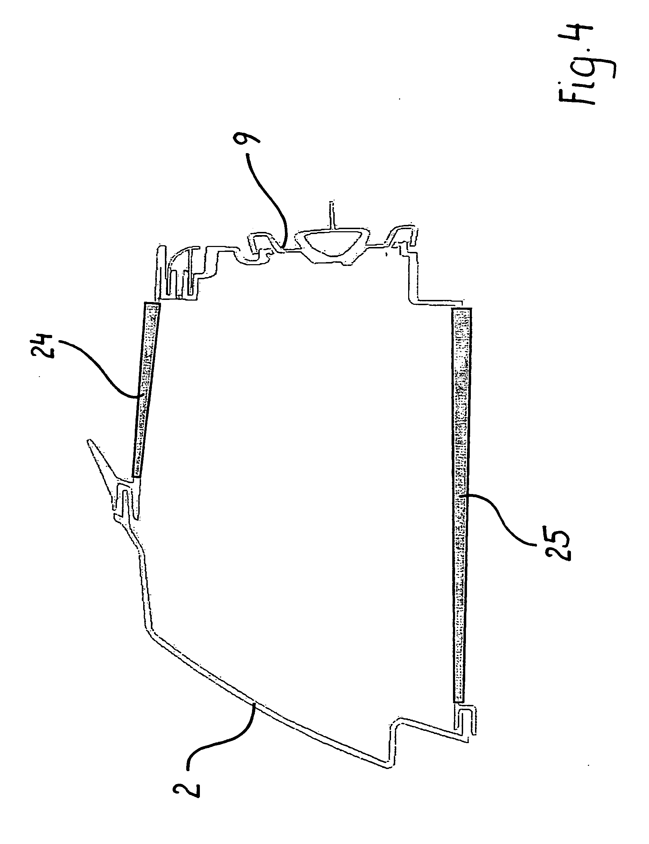

Fig. 4 zeigt die Ausbildung der Absorberelemente in Form von Trapezprofilen 24, 25, die als Vollprofile ausgeführt sind. Der Querschnitt nimmt in Deformationsrichtung kontinuierlich zu.

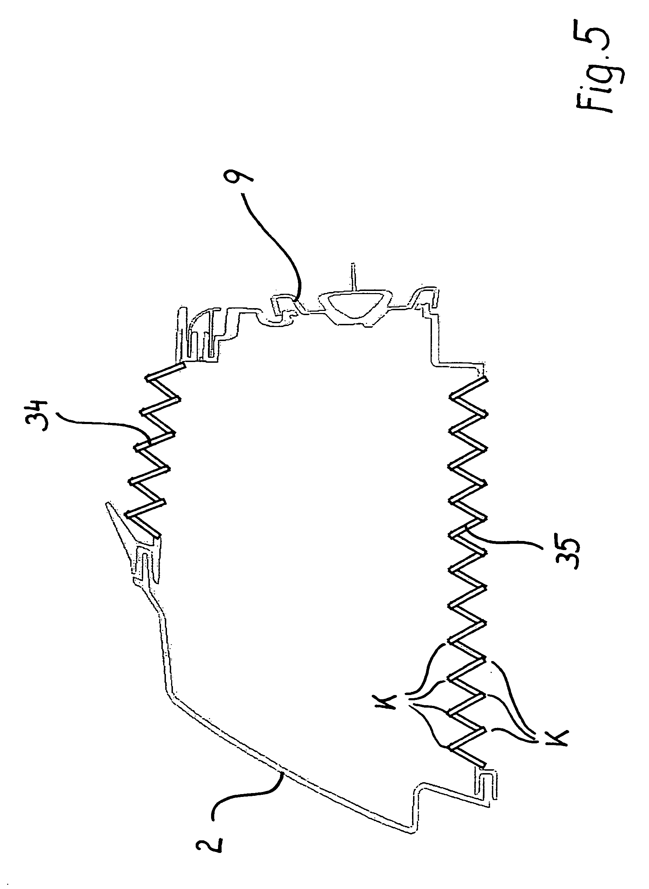

Fig. 5 zeigt Zick-Zack-Profile 34, 35, die mit einer Vielzahl von Knickstellen K versehen sind. Bevorzugt sind mehr als 100, insbesondere ca. 200 solcher Knickstellen K vorgesehen, so dass sich eine ziehharmonikaförmige Deformation bzw. Stauchung ergibt. Aufgrund der hohen Zahl der Knickstellen K erfolgt ein rascher Wechsel zwischen Kraftaufbau und anschließendem Kraftabbau, der für die Fahrzeuginsassen insgesamt eine Vergleichung der Belastung auf niedrigem Niveau sicherstellt.

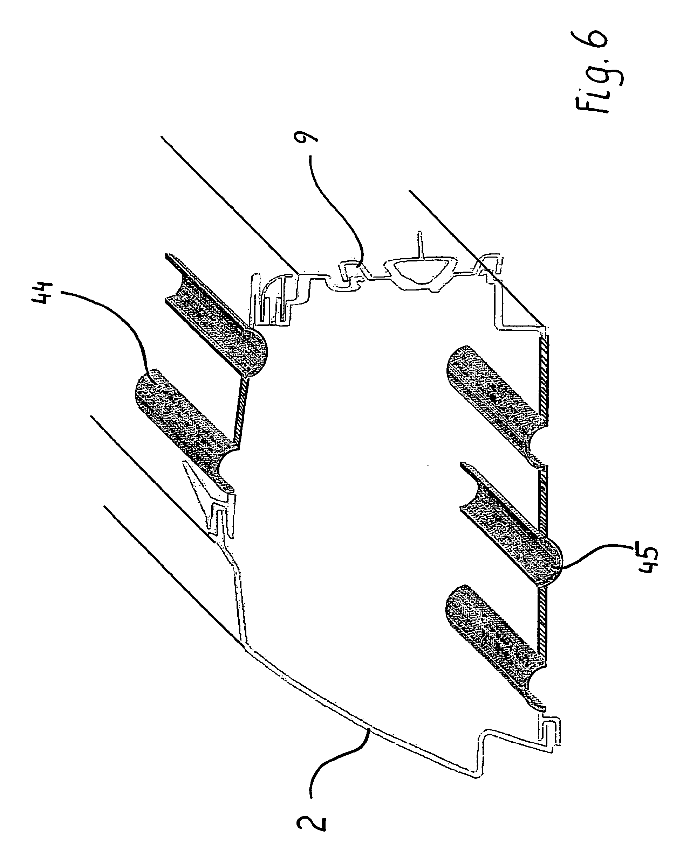

Die Ausführungsvariante nach Fig. 6 zeigt Halbschalenprofile 44, 45, die ebenfalls eine sehr gute Vergleichmäßigung des Deformationsvorgangs erlauben.

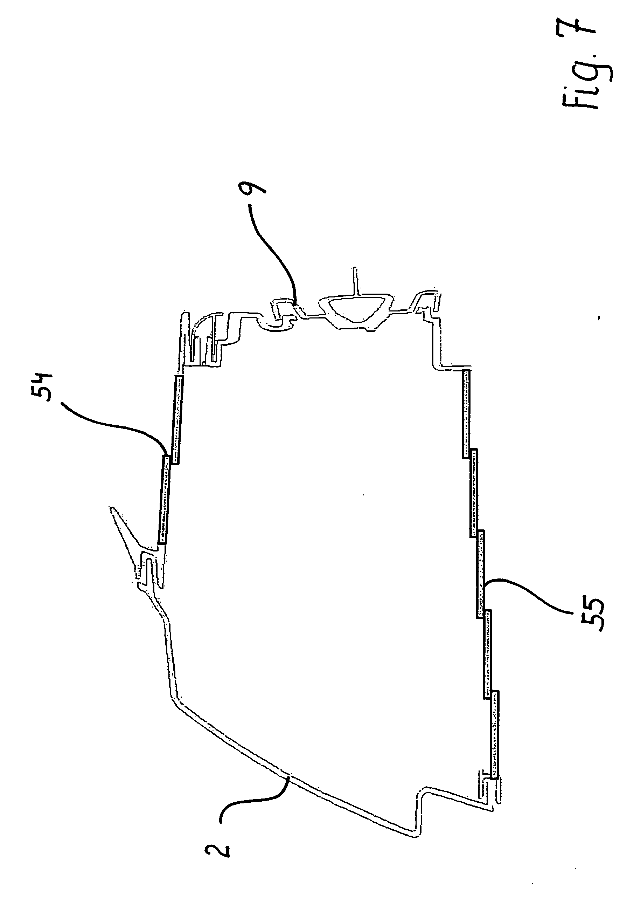

Fig. 7 zeigt Stufenprofile 54, 55, die sich aus einzelnen Flach-Teilprofilen kostengünstig herstellen lassen und darüber hinaus ein sehr gutes Deformationsverhalten zeigen.

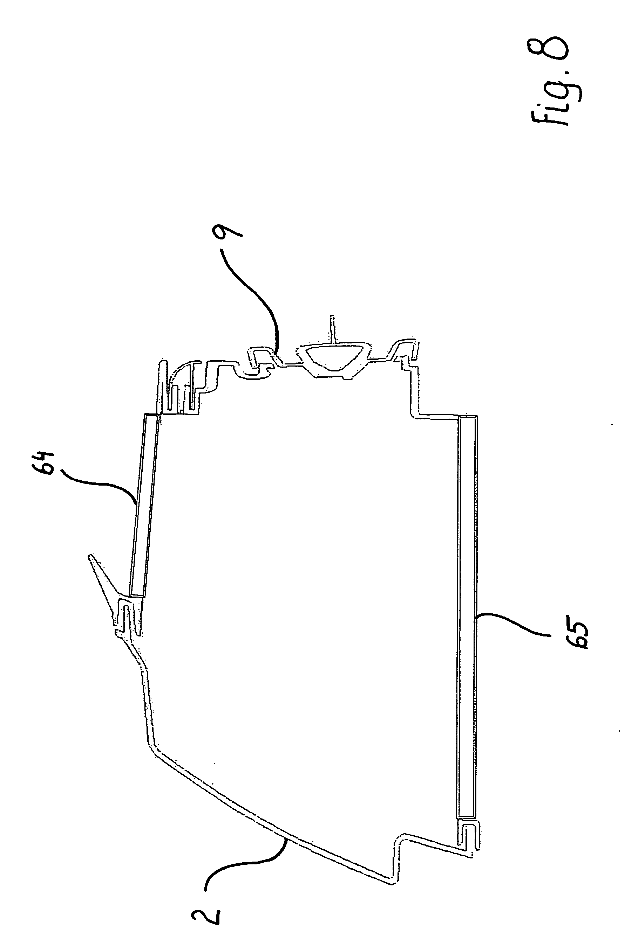

Fig. 8 stellt eine Variante dar, bei der die Absorptionselemente als Hohlprofile 64, 65 ausgeführt sind. Diese Profilform zeichnet sich durch eine gute Steifigkeit aus.

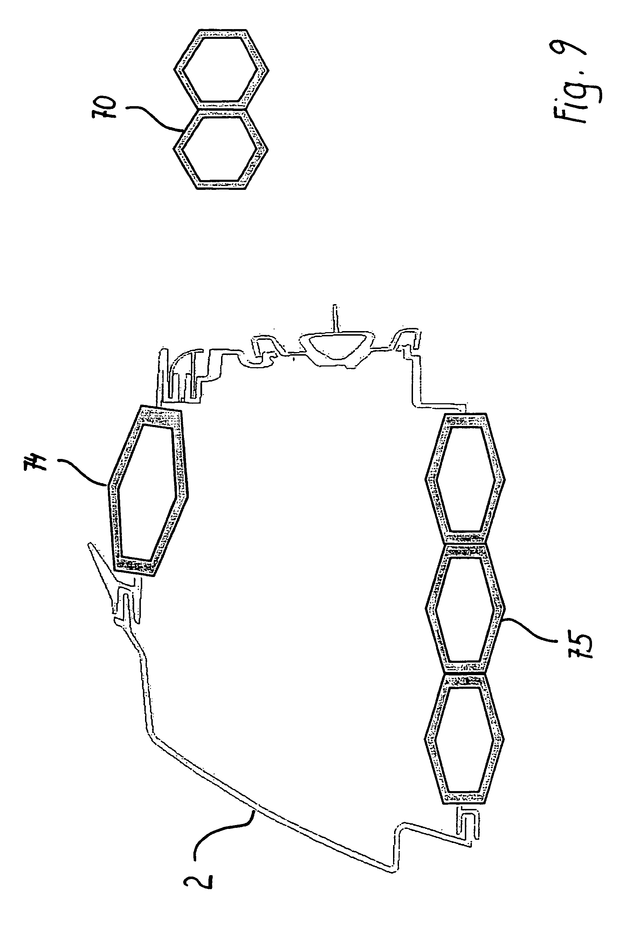

Gemäß einer Weiterentwicklung sind die Absorptionselemente nach Fig. 9 als Wabenprofile 74, 75 ausgeführt. Diese besitzen eine extrem hohe Steifigkeit und ergeben ein lineares Deformationsverhalten in Bezug auf die Deformationsrichtung. Durch die Form der einzelnen Waben ist eine ideal gleichmäßige Stauchung bis hin zur flach gedrückten Endposition möglich. Hinsichtlich der konkreten Form sind verschiedene Alternativen möglich, wie ein Wabenprofil 70 in hexagonaler Ausführung.

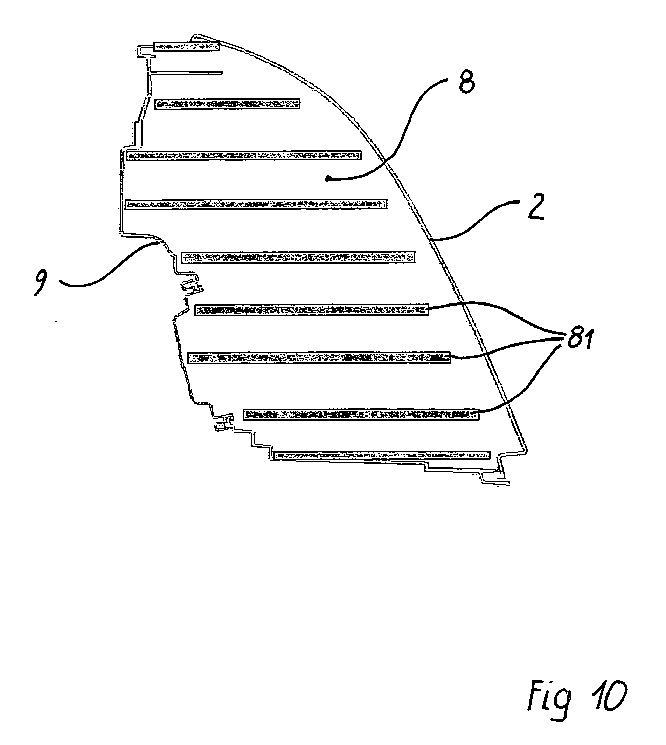

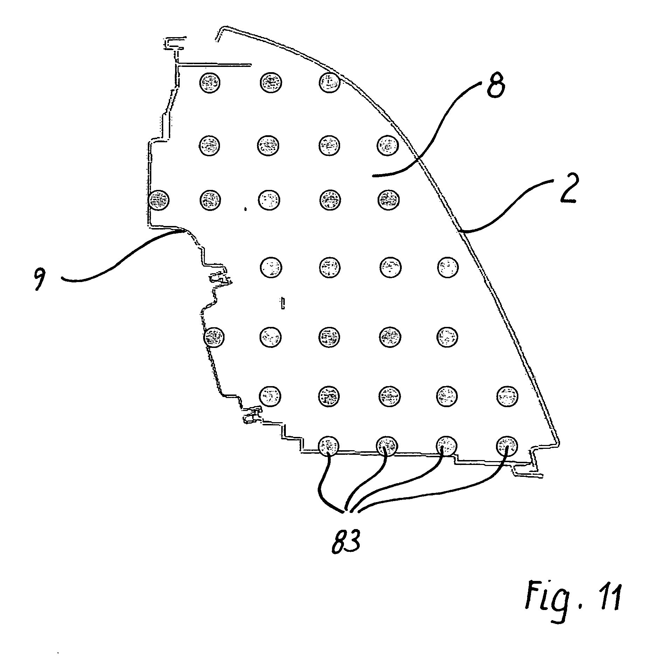

Fig. 10 und 11 zeigen einen Scheinwerfer 1 (in gegenüber den vorangegangenen Darstellungen entgegengesetzten Anordnung) mit einer Scheibe 2 und einer Gehäuserückwand 9. Infolge der gewählten Darstellung ist eine der beiden Gehäuseseitenwände 8 sichtbar.

Gemäß Fig. 10 ist eine Vielzahl von Metallstreifen 81 an der Gehäusewand 8 angebracht. Die Anordnung ist so gewählt, dass sie in Verformungsrichtung verläuft. Die Metallstreifen 81 dienen daher der Lastaufnahme und verstärken die beispielsweise aus Kunststoffmaterial gefertigte Gehäuseseitenwand 8. Auf diese Weise entsteht ein Absorptionselement in Hybridbauweise, das einerseits kostengünstig herstellbar ist, andererseits ein hohes Absorptionsvermögen besitzt. Solche Lösungen kommen insbesondere auch dann zum Einsatz, wenn die Konturvorgaben für das Scheinwerfergehäuse komplexer Natur sind und nur im Wege des Spritzgießverfahrens realisierbar sind.

Fig. 11 zeigt eine Seitenwand 8, die mit einer Vielzahl von Löchern 83 versehen ist. Hierdurch wird erreicht, dass die Seitenwand 8 gezielte Schwächungszonen aufweist, die eine vorgegebene Deformation erlauben.

Die vorstehenden Beispiele zeigen, dass je nach gewünschtem Deformations- und Absorptionsverhalten eine optimale Auslegung eines Scheinwerfergehäuses als Crashbox für den High-Speed-Crash möglich ist. Hierbei ist es möglich, die verschiedenen Formen von Absorptionselementen an einer oder mehreren Gehäusewandungen zu realisieren, auch sind Mischformen der unterschiedlichen Profile jederzeit möglich. Hierbei spielt auch die Wahl des Materials für das Scheinwerfergehäuse eine wichtige Rolle. Als besonders geeignet haben sich Faser oder Mineralien verstärkte spritzgieß- oder pressfähige Kunststoffe erwiesen. Entscheidend ist die Auslegung dahingehend, dass die im Befestigungs- oder Anbindungsbereich des Gehäuses an der übrigen Fahrzeugstruktur auftretende Kraft höher sein muss als das in dem als Crashbox wirkenden Gehäuse auftretenden Kraftniveau. Im Übrigen kann die Aufteilung und die Reihenfolge der Krafteinleitung auf die verschiedenen Crashebenen je nach Erfordernis frei gestaltet werden.

### Bezugszeichenliste

- 1: Scheinwerfer
- 2: Scheibe
- 3: Scheinwerfergehäuse
- 4: obere Gehäusewand, Absorberelement
- 5: untere Gehäusewand, Absorberelement
- 6: Deformationsweg
- 7: Deformationsweg
- 8: Gehäuse (Seitenwand), Absorberelement
- 9: Gehäuserückwand
- 10: Fahrzeugstruktur
- 14: Wellenprofil
- 24: Trapezprofil
- 25: Trapezprofil
- 34: Zick-Zack-Profil
- 35: Zick-Zack-Profil
- 44: Halbschalenprofil
- 45: Halbschalenprofil
- 54: Stufenprofil
- 55: Stufenprofil
- 64: Hohlprofil
- 65: Hohlprofil
- 70: Wabenprofil
- 74: Wabenprofil
- 75: Wabenprofil
- 81: Metallstreifen
- 83: Loch

- A: Crashzone
- B: Crashzone
- C1: Crashebene 1
- C2: Crashebene 2
- C3: Crashebene 3

- F: Fahrzeug
- G: Gehäuse
- K: Knickstelle, Absorptionselement
- S: Scheinwerfer
- V: Vorderwagenstruktur
- X: Richtung

## Patentansprüche

1. Kraftfahrzeug (F) mit einer Vorderwagenstruktur (V) zum Absorbieren von Energie im Falle eines Hochgeschwindigkeits-Zusammenstoßes und mit wenigstens einem ein Gehäuse (G) aufweisenden Scheinwerfer (S), wobei das Gehäuse (G) als Bestandteil der Vorderwagenstruktur (V) ausgebildet und plastisch verformbar ist, wobei das Gehäuse (G) an einem eine Crashebene (C1) bildenden Abschnitt der Vorderwagenstruktur (V) derart befestigt ist, dass das Gehäuse (G) eine lineare Verformungsbewegung vollziehen kann, wobei das Gehäuse als Bestandteil einer zum Schutz von Fahrzeuginsassen im Fall eines Hochgeschwindigkeitszusammenstosses vorgesehenen Crashebene (C1) zur Aufnahme von Energie vorgesehen ist,
**dadurch gekennzeichnet, dass**
der gesamte Scheinwerfer (S)bei einem Zusammenstoss zunächst bis zu einer rückwärtigen Anlage an die Kotflügelbank nach hinten verschiebbar und erst bei weiterer Krafteinwirkung plastisch verformbar ausgeführt ist, wobei die Crashebene (C1) durch einen Frontendträger-Obergurt als Querträger zum Zusammenhalten der Fahrzeugstruktur, eine Kotflügelbank als Längsträger und einen Scheinwerfer (S) als Crashbox ausgebildet ist.

2. Kraftfahrzeug (F) nach Anspruch 1,
**dadurch gekennzeichnet, dass** das Gehäuse (G) wenigstens einen Abschnitt aufweist, der als Absorberelement (4, 5, 8) ausgebildet ist.

3. Kraftfahrzeug nach Anspruch 2,
**dadurch gekennzeichnet, dass** das wenigstens eine Absorberelement (4, 5, 8) eine profilierte Gehäusewand ist.

4. Kraftfahrzeug (F) nach Anspruch 2 oder 3,
**dadurch gekennzeichnet, dass** das wenigstens eine Absorberelement (4, 5, 8) eine Vielzahl von Knickstellen (K) aufweist.

## Claims

1. Motor vehicle (F) comprising a front body structure (V) for absorbing energy in the event of a high-speed collision and comprising at least one headlamp (S) having a housing (G), wherein the housing (G) is configured as part of the front body structure (V) and is plastically deformable, wherein the housing (G) is attached to a section of the front body structure (V) forming a crash plane (C1) in such a way that the housing (G) can execute a linear deformation movement, wherein the housing is provided as part of a crash plane (C1) for absorbing energy which is intended to protect vehicle passengers in the event of a high-speed collision, **characterised in that** the headlamp (S) as a whole is designed such that, in the event of a collision, it can firstly be displaced rearwards until it reaches a rear stop on the wing fixing bar and can be deformed plastically only if further forces act thereon, wherein the crash plane (C1) is formed by a front end support top flange as the transverse support for holding the vehicle structure together, a wing fixing bar as the longitudinal support and a headlamp (S) as the crash box.

2. Motor vehicle (F) according to claim 1, **characterised in that** the housing (G) has at least one section which is designed as an absorber element (4, 5, 8).

3. Motor vehicle according to claim 2, **characterised in that** the at least one absorber element (4, 5, 8) is a profiled housing wall.

4. Motor vehicle (F) according to claim 2 or 3, **characterised in that** the at least one absorber element (4, 5, 8) comprises a plurality of crumple points (K).

## Revendications

1. Véhicule automobile (F) ayant une structure avant (V) pour absorber l'énergie en cas de collision à vitesse élevée et au moins un projecteur (S) comportant un boîtier (G);
le boîtier (G) faisant partie de la structure avant (V) du véhicule et ce boîtier étant plastiquement déformable,
le boîtier (G) étant fixé à un segment de la structure avant (V) du véhicule formant un plan de collision (C1) de façon que le boîtier (G) puisse effectuer un mouvement de déformation linéaire,
le boîtier faisant partie d'un plan de collision (C1) pour recevoir l'énergie et protéger les occupants du véhicule en cas de collision à vitesse élevée,
**caractérisé en ce qu'**
en cas de collision, l'ensemble du projecteur (S) coulisse tout d'abord jusqu'à un appui arrière contre l'appui de l'aile, par coulissement, et il est seulement plastiquement déformable sous l'effet d'une force ultérieure,
le plan de collision (C1) étant réalisé par une ceinture supérieure de poutre d'extrémité frontale comme traverse réunissant la structure du véhicule, l'appui d'aile comme support longitudinal et un projecteur (S) comme boîte de collision.

2. Véhicule (F) selon la revendication 1,
**caractérisé en ce que**
le boîtier (G) comporte au moins un segment réalisé sous forme d'un élément absorbeur (4, 5, 8).

3. Véhicule (F) selon la revendication 2,
**caractérisé en ce qu'**
au moins un élément absorbeur (4, 5, 8) est constitué par une paroi profilée de boîtier.

4. Véhicule (F) selon la revendication 2 ou 3,
**caractérisé en ce qu'**
au moins un élément absorbeur (4, 5, 8) comporte de nombreux points de pliage (K).
